# EUROPEAN PATENT SPECIFICATION

(11) **EP 1 157 367 B1**
(45) Date of publication and mention of the grant of the patent: **24.09.2003**
(21) Application number: 00901418.4
(22) Date of filing: 25.01.2000
(51) Int. Cl.: G08G 1/0968

(54) **METHOD FOR MAKING NAVIGATION DATA AVAILABLE IN A VEHICLE AND NAVIGATION SYSTEM APPLYING THIS METHOD**
VERFAHREN ZUR VERFÜGUNG VON NAVIGATIONSDATEN IN EINEM FAHRZEUG UND NAVIGATIONSSYSTEM
PROCEDE POUR FOURNIR DES DONNEES DE NAVIGATION A UN VEHICULE, ET SYSTEME DE NAVIGATION APPLIQUANT CE PROCEDE

(30) Priority: 02.02.1999 BE 9900065
(43) Date of publication of application: 28.11.2001
(73) Proprietor: ACUNIA, Naamloze Vennootschap, 3000 Leuven (BE)
(72) Inventor: BUYTAERT, Steven, Herwig, Cyriel, B-3010 Kessel-Lo (BE)
(74) Representative: Donné, Eddy
(86) International application number: BE0000009
(87) International publication number: WO00046776

(56) References cited:
- EP-A- 0 803 852
- WO-A-95/21435
- WO-A-96/11380
- FR-A- 2 762 906
- US-A- 4 954 958
- US-A- 5 543 789

## Description

The present invention concerns a method for making navigation data available in a vehicle, in particular a road vehicle, as well as a device, in particular a navigation and/or telematics system applying the above-mentioned method.

At present, mainly two types of navigation systems for road vehicles are known.

The first type makes use of what is called an 'on-board' calculation system, whereby all the data are available on board of the vehicle and thus also all the calculations are made on board of the vehicle. All the data, i.e. all the road maps, are hereby situated on a carrier, usually a CD-ROM, in the vehicle. The calculations to determine the route to follow and to represent this on a display or such are all made inside the vehicle.

The navigation system of this first type is disadvantageous in that the data on the CD-ROM are static and as a consequence become obsolete after a while. This implies that temporary changes in the traffic situation such as diversions and road works are not taken into account. Permanent changes, such as changed names of streets, hotels, restaurants and such, as well as newly laid roads are not taken into account either.

Another disadvantage of such a navigation system is that it does not reckon in any way whatsoever with current traffic information. Thus, there is no interaction between the route description on the one hand and the current situation which practically influences this route on the other hand.

A second type of navigation system makes use of what is called an 'off-board' calculation system. This system makes use of a central 'server' in which current data are stored, by which are meant both current road maps and current traffic information. Upon request, the 'server' will send a precalculated route to the vehicle in a wireless manner, for example via GSM/SMS, whereby the position of the vehicle is taken into account.

This second type of navigation system is disadvantageous in that for every new calculation, for example when one deviates from the given route, one has to make a new connection with the 'server', and in that the available band width is too small to provide for a continuous connection with the vehicle and to deliver the required information in no time; further there is also the problem of the latency of SMS messages.

Up to now, use is always exclusively made of either an 'on-board' calculation system or an 'off-board' calculation system. Examples thereof are known from documents US 4.954.958, WO 96/11380, EP 0.803.852, US 5.543.789, FR 2.762.906 and WO 95/21435.

The invention aims a method for making navigation data available to a vehicle, as well as a new type of navigation system, whereby the above-mentioned disadvantages are excluded.

To this end, the invention in the first place aims a method for making navigation data available to a vehicle, in particular a road vehicle, whereby use is made of means to determine the position of the vehicle on the one hand, and whereby navigation data are transmitted via a wireless connection to a telematics device in the vehicle on the other hand, characterised in that at least a number of navigational calculations or re-calculations of a route are made in the telematics device of the vehicle itself, based on the navigation data received via the wireless connection.

As the navigation data are received in a wireless manner, it is always possible to obtain current data, and the disadvantages of static data are excluded. As the transmitted navigation data also contain information which allows for a calculation in the vehicle, one does not have to call on the 'server' for every new calculation, as a result of which also the disadvantages of a conventional 'off-board' calculation are excluded.

According to a preferred embodiment of the method, at least the following steps will be provided for when determining a route:
- sending a request for a route to a desired location, via a wireless connection between the telematics device of the vehicle and a device of a data provider or 'server';
- determination of a precalculated route by the data provider;
- transmitting of the data of the precalculated route to the telematics device in the vehicle by the data provider and storage thereof in a memory in the telematics device;
- transmitting of contextual information related to the surrounding area of the precalculated route, also by the data provider, and storage thereof in a memory in the telematics device;
- sending signals to the telematics device which enable the driver of the vehicle to follow the precalculated route;
- and, if desired or necessary, making additional navigational calculations on the basis of the stored contextual information by means of an algorithm.

This method is advantageous in that the precalculated route and the contextual information can be calculated in a short time by a powerful arithmetic unit, whereas a less powerful arithmetic unit in the telematics device of the vehicle will do to carry out most of the necessary recalculations in the vehicle itself, such that one does not have to call on the 'server' again for this.

The contextual information will be used for example to recalculate the route at the time the vehicle leaves the precalculated route.

Practically, a certain quantity of contextual information is preferably transmitted, and when this contextual information is insufficient for the calculation concerned in the telematics device of the vehicle, additional or new contextual information will be automatically received in a wireless manner as of the data supplier. This makes it possible to obtain an advantageous compromise between the quantity of transmitted contextual information on the one hand, and the chance of additional contextual information being necessary on the other hand.

According to another practical aspect, selected contextual information will be transmitted according to the invention, whereby it contains more details for those zones where the chance that the route will have to be recalculated is bigger than for the other zones. In particular, the contextual information preferably contains at least more details about the starting point and the end point of the precalculated route, as well as more details regarding busy traffic points, whereas it contains less details regarding the intermediate parts of the route. In this manner, the information package to be transmitted can be kept relatively small.

According to a variant of the invention, the calculation of the route to be followed can also be carried out entirely in the telematics device of the vehicle, whereby only navigation data are received from outside, hereafter also called 'contextual information', which make it possible to calculate the route, whereas precalculated routes are no longer transmitted. In this case, the method is thus characterised in that navigation data are generated which allow for a calculation of routes as a function of the position of the vehicle and/or the required final destination and/or the transmitting beacon used, in that these navigation data are transmitted to the vehicle and in that the route to be followed is calculated in the telematics device of the vehicle.

Hereby, the transmission of the navigation data, which in this case contain all the contextual information making it possible to make an entirely independent calculation of the route in the vehicle, can either take place following a request from a vehicle or automatically, either continuously or at certain intervals. The transmission can also take place at regular points in time, combined with the transmission following a request, in order to make it possible to also obtain information in between two points in time if necessary.

According to a special embodiment, the method is characterised in that several transmitting beacons are used, each with a restricted range, but together covering an entire area, and in that navigation data are transmitted regarding the immediate surrounding area of every transmitting beacon concerned, containing many details regarding the immediate surrounding area of the transmitting beacon concerned, whereas less details are transmitted with relation to the broader area. In this manner, it is possible to always obtain the most relevant information in the vehicle. The information regarding the broader area enables the telematics device in the vehicle to determine what main roads should be taken. The information regarding the immediate vicinity makes it possible to accurately calculate and represent the route in the surrounding area of the vehicle. As the vehicle moves and comes within reach of another transmitting beacon, it will receive new information which is then relevant for the zone concerned in which the vehicle is situated, such that a detailed route for the immediate surrounding area of the vehicle can be calculated any time.

Both in the case where a precalculated route is transmitted via the wireless connection, together with contextual information, and in the case where only contextual information is transmitted without a precalculated route, the transmitted navigation data will preferably be transmitted together with an algorithm.

Although the method also offers advantages when only the current road network is taken into account, also current information such as traffic information, weather information, etc. will preferably be taken into account.

For practical reasons, the navigation data to be transmitted in a wireless manner, in particular the above-mentioned algorithm, will preferably be compressed. The same goes for the vector data used.

The above-mentioned navigation data are preferably transmitted as a code which is executed in JAVA.

It should be noted that, also in the case where navigation data are created as a function of a request and are subsequently transmitted to the applicant in the form of a precalculated route, accompanied by the necessary contextual information, this method can be combined with an automatic update as a function of the position of the vehicle.

The invention also concerns a device for providing navigation data to a vehicle, in particular a road vehicle, applying the above-mentioned method, characterised in that it mainly consists of a device to among others provide navigation data in a wireless manner, whereby this device is equipped with means which can generate and transmit contextual information which makes it possible to make navigational calculations or re-calculations of a route in the vehicle itself; a telematics device which is present in the vehicle itself having at least means for the wireless reception of the above-mentioned navigation data, means for putting in data so as to ask for a route, means for the processing of navigation data having an arithmetic unit for calculating a requested route on the basis of the above-mentioned contextual information, and means for representing the navigation data which are important to the driver; and means to determine the position of the vehicle working in conjunction with the telematics device.

According to the most preferred embodiment, whereby not all the calculations regarding the route are carried out inside the vehicle, the device for providing the navigation data in a wireless manner is also equipped with means which can precalculate a route, whereby not only contextual information, but also a precalculated route together with contextual information is transmitted to the vehicle. The arithmetic unit in the telematics device of the vehicle carrying out calculations on the basis of the contextual information is then only activated when additional calculations, complementary to the route which has been precalculated off-board, have to be carried out.

In order to better explain the characteristics of the invention, the following preferred embodiments are described as an example only without being limitative in any way, with reference to the accompanying drawings, in which:
figure 1 represents a device according to the invention as a block diagram;
figure 2 schematically illustrates another method according to the invention.

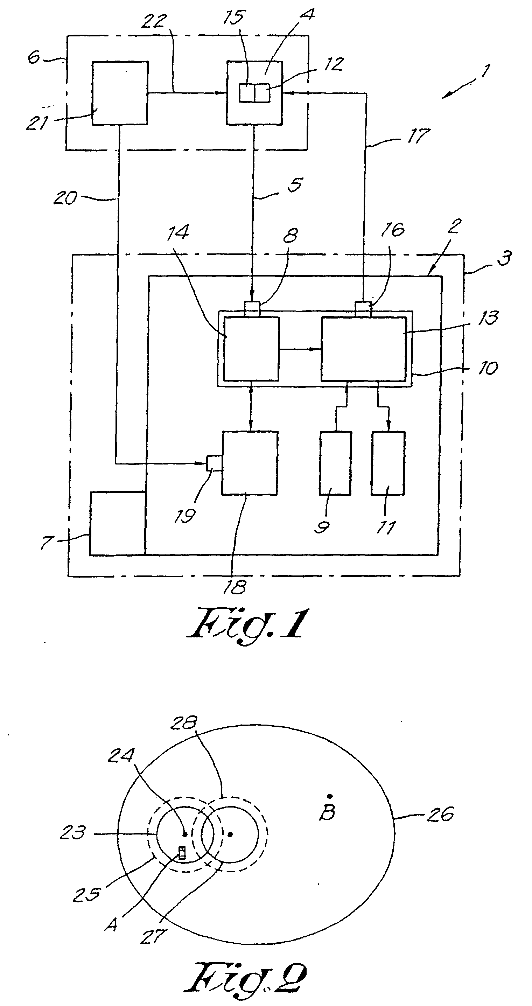

Figure 1 schematically represents a device 1 according to the invention, which consists of a telematics device 2 provided in a vehicle 3 on the one hand, and of a device 4 to provide navigation data 5 in a wireless manner, which is erected fixed, for example which is provided in a switchboard 6 and which is equipped with peripherals which are not represented, in particular transmitting and receiver units. Moreover, the device 1 also contains means 7 to determine the position of the vehicle 3, which means co-operate with the telematics device 2.

The telematics device 2 contains means 8 for the wireless reception of the above-mentioned navigation data 5, means 9 to input data so as to apply for a route, means 10 for processing the navigation data 5 and means 11 to represent the navigation data which are important to the driver, for example in the form of a street plan upon which is indicated where the vehicle 3 is situated and what road should be followed, either or not combined with audio signals, represented on a display.

The invention is special in that the device 4 is equipped with means 12, in particular calculation means, which can generate contextual information which makes it possible for at least a number of navigational calculations to be carried out in the vehicle 3, in particular in the means 10, on the basis of said contextual information.

Apart from the conventional module 13, the means 10 also contain an arithmetic unit 14 for carrying out navigational calculations regarding the route to be followed independently on the basis of the above-mentioned contextual information which is contained in the transmitted navigation data 5.

Although it is not excluded according to the invention that information is exclusively transmitted to the arithmetic unit 14, and that all route calculations are made in this arithmetic unit 14, a precalculated route is preferably determined in the device 4 which is transmitted to the telematics device 2 together with the contextual information. To this end, the device 4 consequently also contains means 15 which can calculate such a route beforehand as a function of a request signal 17 which is transmitted in a wireless manner via transmitting means 16.

The telematics device 2 also contains a unit 18 for processing traffic information, working in conjunction with the arithmetic unit 14, such that the route can be recalculated at any moment as a function of the traffic situation. In this unit 18 is preferably built in a filter unit which exclusively transmits the relevant information to the above-mentioned arithmetic unit 14.

The unit 18 is equipped with reception means 19 which make it possible to receive information 20 from a data provider 21 of traffic information in a wireless manner. The latter also provides, as indicated by line 22, information to the device 4, such that when the precalculated route and the accompanying contextual information are generated, the most recent traffic information is taken into account as of that moment.

To sum up, we could say that the device 4 functions as a 'navigation server', the arithmetic unit 14 functions as a 'navigation agent', the means 18 function as a 'traffic agent' and the means 21 function as a 'traffic server'.

It should be noted that the different calculation means, units, etc., must not necessarily be made as separate parts. They may also be integrated as a whole in one or several electronic circuits.

It should also be noted that the wireless connections must not necessarily all follow separate channels, but that one and the same transmitter channel can be used to this end, for example via GSM.

The above-mentioned means 7 can be of any nature whatsoever. They preferably consist of a GPS (Global Positioning System). Naturally, also other systems can be used to determine the position of the vehicle 3, whereby use is made for example of fixed transmitting beacons, such as GSM masts, and of trigonometrical calculations, or whereby use is made of gyroscopes, direction detectors, speedometers, etc., or a combination of several of these possibilities.

The working of the device 1 is as follows.

When the navigation system is used, the driver of the vehicle 3 formulates a request for a specific route via the means 9, for example by putting in the destination. The point of departure is automatically known through the positioning of the vehicle 3 with the means 7.

The above-mentioned request is transmitted in a wireless manner to the device 4. In this device 4 is calculated a route by the means 15. The means 12 hereby generate relevant contextual information which preferably contains many details regarding the point of departure and the destination of the precalculated route, as well as busy traffic points, but which contains relatively few details regarding the intermediate parts of the route.

When determining the precalculated route and the contextual information, the most recent traffic information coming from the data supplier 21 is simultaneously taken into account.

This information is transmitted to the telematics device 2 in the form of navigation data 5 and it is stored in a memory. The precalculated route is appropriately transformed via the module 13 into a signal which can be supplied to the means 11, preferably on a display.

Via the means 7, the position of the vehicle 3 is permanently calculated. The module 13 makes sure that a comparison is made in the known manner between the current position and the precalculated route. As soon as this route is deviated from, and a recalculation has to be made, use is made to this end according to the invention of the arithmetic unit 14 which makes it possible to make a recalculation on the basis of the contextual information which has been received beforehand without having to imply the device 4 again. Only in the case when the contextual information is insufficient, a request can be sent to the device 4 to transmit additional contextual information.

It is clear that, as the device 4 does not have to be implied for every calculation, the disadvantages mentioned in the introduction are excluded.

Via the unit 18, the contextual information in the arithmetic unit 14 can be adjusted as a function of the most recent traffic information. This traffic information can be asked for either regularly, or it can be received automatically and be updated every time new information is distributed in a wireless manner. The filter unit, which is integrated in the unit 18 as mentioned above, only retains information which is relevant.

As already mentioned in the introduction, the contextual information will not be formulated as a result of a request according to a variant, but it will be permanently distributed, whereby new information is automatically received by the telematics device 2 as a function of the range of transmission in which the vehicle 3 is situated. This is schematically represented in figure 2.

When the vehicle 3 is situated within the range of transmission 23, it will receive contextual information from the mast 24, with many details regarding the zone 25 and few details regarding the larger zone 26. When a route calculation from A to B is required, the little information regarding zone 26 makes it possible to determine the main roads, whereas the detailed information regarding the zone 25 makes it possible to obtain information and to make a calculation regarding the immediate surrounding area of the vehicle 3.

As the vehicle 3 moves and enters another range of transmission 27, new detailed information regarding the zone 28 is received. In this manner, information is always available to determine a route in a sound manner.

The transmission ranges 23 and 27 may for example be transmission ranges of GSM masts, whereas the zones 25 and 28 practically coincide with them. The larger zone 26 may for example consist of a larger radius around one of the masts 24, or it may for example be the surface of a country or several countries.

The present invention is by no means limited to the above-described embodiments represented in the accompanying drawings; on the contrary, such a method and device can be made in all sorts of variants while still remaining within the scope of the invention limited by the appended claims.

## Claims

1. Method for making navigation data available in a vehicle, in particular a road vehicle, whereby use is made of means (7) to determine the position of the vehicle (3) on the one hand, and whereby navigation data (5) are transmitted via a wireless connection to a telematics device (2) in the vehicle (3) on the other hand, **characterised in that** at least a number of navigational calculations or re-calculations of a route are made in the telematics device (2) of the vehicle (3) itself, based on the navigation data (5) received via the wireless connection.

2. Method according to claim 1, **characterised in that**, when determining a route, at least the following steps are provided for:
- sending a request for a route to a desired location, via a wireless connection between the telematics device (2) of the vehicle (3) and a device (4) of a data provider (21);
- determination of a precalculated route by the data provider;
- transmitting of the data of the precalculated route to the telematics device (2) in the vehicle (3) by the data provider and storage thereof in a memory in the telematics device (2);
- transmitting of contextual information related to the surrounding area of the precalculated route, also by the data provider, and storage thereof in a memory in the telematics device (2);
- sending signals to the telematics device (2) which enable the driver of the vehicle (3) to follow the precalculated route;
- and, if desired or necessary, making additional navigational calculations on the basis of the stored contextual information in the telematics device (2) itself.

3. Method according to claim 2, **characterised in that** the contextual information is used to recalculate the route on the moment when the vehicle (3) leaves the precalculated route.

4. Method according to claim 2 or 3, **characterised in that** a certain quantity of contextual information is transmitted, and when this contextual information is insufficient for the calculation concerned in the telematics device (2) of the vehicle (3), additional or new contextual information will be automatically received in a wireless manner.

5. Method according to claim 1, **characterised in that** navigation data (5), in particular contextual information, are generated which allow for a calculation of routes as a function of the position of the vehicle (3) and/or the final destination of the required route and/or the transmitting beacon used, **in that** these navigation data (5) are transmitted to the vehicle (3) and **in that** the route to be followed is calculated in the telematics device (2) of the vehicle (3).

6. Method according to claim 5, **characterised in that** the transmission takes place at regular points in time, either or not combined with transmissions following a request from the telematics device (2) of the vehicle (3).

7. Method according to claim 5 or 6, **characterised in that** several transmitting beacons are used, each with a restricted range, but together covering an entire area, and **in that** navigation data (5) are transmitted regarding the immediate surrounding area of every, transmitting beacon concerned, containing many details of the immediate surrounding area of the transmitting beacon concerned, whereas less details are transmitted with relation to the broader area.

8. Method according to any of claims 2 to 7, **characterised in that** selected contextual information is transmitted, whereby it contains more details for those zones where the chance that the route will have to be recalculated is greater than for the other zones.

9. Method according to claim 8, **characterised in that** the contextual information contains at least more details about the starting point and end point of the precalculated route, as well as more details regarding busy traffic points, whereas it contains less details regarding the intermediate parts of the route.

10. Method according to any of the preceding claims, **characterised in that** the navigation data (5) which are obtained via the wireless connection and which make it possible to carry out the above-mentioned navigational calculations in the telematics device (2) in the vehicle (3), in particular the above-mentioned contextual information, are transmitted together with an algorithm.

11. Method according to any of the preceding claims, **characterised in that** current information is taken into account.

12. Method according to claim 11, **characterised in that** the current traffic information is at least implied in the calculation of the navigation data (5) which have to make it possible to carry out navigational calculations in the vehicle (3) itself, and is in particular implied in the determination of the above-mentioned contextual information.

13. Method according to claim 11 or 12, **characterised in that** the current traffic information is transmitted directly to the telematics device (2) in the vehicle (3), whereby this telematics device (2) recalculates the route to be followed as a function thereof.

14. Method according to any of the preceding claims, **characterised in that** the above-mentioned navigation data (5), in particular the above-mentioned algorithm, are compressed.

15. Method according to any of the preceding claims, **characterised in that** the vector data of the above-mentioned navigation data (5) are compressed.

16. Method according to any of the preceding claims, **characterised in that** the above-mentioned navigation data (5) are transmitted as a code executed in JAVA.

17. Method according to any of the preceding claims, **characterised in that** the navigation data (5) which make it possible to make a calculation on board of the vehicle (3) are automatically regularly updated as a function of the position of the vehicle (3).

18. Device for providing navigation data to a vehicle, in particular a road vehicle, applying the method according to any of the preceding claims, **characterised in that** it mainly consists of a device (4) for among others providing navigation data (5) in a wireless manner, whereby this device (4) is equipped with means (12) which can generate and transmit contextual information, which makes it possible to make navigational calculations or re-calculations of a route in the vehicle (3) itself; a telematics device (2) which is present in the vehicle (3) having at least means (8) for the wireless reception of the above-mentioned navigation data (5), means (9) for putting in data so as to ask for a route, means (10) for the processing of navigation data (5) having an arithmetic unit (14) for calculating or recalculating a requested route on the basis of the above-mentioned contextual information, and means (11) for representing the navigation data which are important to the driver; and means (7) to determine the position of the vehicle (3) which work in conjunction with the telematics device (2) or which are part thereof.

19. Device according to claim 18, **characterised in that** the device (4) for making the navigation data (5) available in a wireless manner contains means (15) which can calculate a route beforehand, so as to transmit the precalculated route together with contextual information to the vehicle (3).

20. Device according to claim 18 or 19, **characterised in that** the means (10) for processing the navigation data (5) also have a unit (18) for processing traffic information, whereby this unit (18) works in conjunction with the above-mentioned arithmetic unit (14).

21. Device according to claim 20, **characterised in that** it contains means (21) for transmitting traffic information, and **in that** the above-mentioned unit (18) for processing the traffic information contains at least a filter unit which exclusively transmits the relevant information to the above-mentioned arithmetic unit (14).

22. Device according to any of claims 18 to 21, **characterised in that** the means for determining the position of the vehicle (3) consist of a GPS.

## Patentansprüche

1. Verfahren, um Navigationsdaten in einem Fahrzeug, insbesondere einem Straßenfahrzeug, verfügbar zu machen, wobei einerseits Gebrauch gemacht wird von Mitteln (7) zur Bestimmung der Position von Fahrzeug (3) und wobei andererseits Navigationsdaten (5) über eine Funkverbindung an ein Telematikgerät (2) im Fahrzeug (3) übertragen werden, **dadurch gekennzeichnet, dass**, basierend auf den über die Funkverbindung empfangenen Navigationsdaten (5), mindestens eine Anzahl von Navigationsberechnungen bzw. -neuberechnungen einer Route in dem Telematikgerät (2) von Fahrzeug (3) selbst ausgeführt werden.

2. Verfahren gemäß Anspruch 1, **dadurch gekennzeichnet, dass**, bei der Ermittlung einer Route, mindestens die folgenden Schritte vorgesehen werden:
- Senden einer Anfrage nach einer Routenbeschreibung zu einer gewünschten Bestimmung über eine Funkverbindung zwischen dem Telematikgerät (2) des Fahrzeugs (3) und einem Gerät (4) eines Datenproviders;;
- Ermittlung einer vorberechneten Route durch den Datenprovider;
- Übertragung der Daten der vorberechneten Route an das Telematikgerät (2) im Fahrzeug (3) durch den Datenprovider und deren Speicherung in einem Speicher im Telematikgerät (2);
- Übertragung kontextueller Informationen in Bezug auf die Umgebung der vorberechneten Route, ebenfalls durch den Datenprovider, und deren Speicherung in einem Speicher im Telematikgerät (2);
- Senden von Signalen an das Telematikgerät (2), die es dem Fahrer von Fahrzeug (3) ermöglichen, der vorberechneten Route zu folgen;
- und, falls gewünscht oder erforderlich, Verfügbarmachung zusätzlicher Navigationsberechnungen auf der Basis der im Telematikgerät (2) selbst gespeicherten kontextuellen Informationen.

3. Verfahren gemäß Anspruch 2, **dadurch gekennzeichnet, dass** die kontextuellen Informationen benutzt werden, um die Route zu dem Zeitpunkt, an dem das Fahrzeug (3) die vorberechnete Route verlässt, neu berechnet werden.

4. Verfahren gemäß Anspruch 2 oder 3, **dadurch gekennzeichnet, dass** eine gewisse Menge kontextueller Informationen übertragen wird, und wenn diese kontextuellen Informationen für die betreffende Berechnung in dem Telematikgerät (2) von Fahrzeug (3) unzureichend sind, zusätzliche oder neue kontextuelle Informationen automatisch per Funk empfangen werden.

5. Verfahren gemäß Anspruch 1, **dadurch gekennzeichnet, dass** Navigationsdaten (5), insbesondere kontextuelle Informationen, erzeugt werden, die eine Berechnung von Routen in Abhängigkeit von der Position von Fahrzeug (3) und/oder von dem Endziels der benötigten Route und/oder von der verwendeten Übertragungsbake ermöglichen, dass diese Navigationsdaten (5) an das Fahrzeug (3) übertragen werden und dass die zu folgende Route in dem Telematikgerät (2) von Fahrzeug (3) berechnet wird.

6. Verfahren gemäß Anspruch 5, **dadurch gekennzeichnet, dass** die Übertragung zu regelmäßigen Zeitpunkten stattfindet, kombiniert oder nicht kombiniert mit Übertragungen infolge einer Anfrage von dem Telematikgerät (2) von Fahrzeug (3) oder nicht.

7. Verfahren gemäß Anspruch 5 oder 6, **dadurch gekennzeichnet, dass** mehrere Übertragungsbaken benutzt werden, jede mit einem beschränkten Bereich, aber die zusammen einen Gesamtbereich abdecken, und dass Navigationsdaten (5) betreffend die unmittelbare Umgebung jeder betroffenen Übertragungsbake übertragen werden, die viele Details zur unmittelbaren Umgebung der betroffenen Übertragungsbake enthalten, während weniger Details in Bezug auf den größeren Bereich übertragen werden.

8. Verfahren gemäß einem der Ansprüche 2 bis 7, **dadurch gekennzeichnet, dass** ausgewählte kontextuelle Informationen übertragen werden, wobei diese mehr Details für die Zonen enthalten, wo es wahrscheinlicher ist, dass die Route neu berechnet werden muss, als für die anderen Zonen.

9. Verfahren gemäß Anspruch 8, **dadurch gekennzeichnet, dass** die kontextuellen Informationen mindestens mehr Details über den Startpunkt und den Endpunkt der vorberechneten Route enthalten sowie mehr Details über verkehrsreiche Punkte, während sie weniger Details betreffend die Zwischenabschnitte der Route enthalten.

10. Verfahren gemäß einem der vorgenannten Ansprüche, **dadurch gekennzeichnet, dass** die Navigationsdaten (5), die über die Funkverbindung erhalten werden und die es ermöglichen, die oben erwähnten Navigationsberechnungen in dem Telematikgerät (2) von Fahrzeug (3) auszuführen, insbesondere die oben erwähnten kontextuellen Informationen, zusammen mit einem Algorithmus übertragen werden.

11. Verfahren gemäß einem der vorgenannten Ansprüche, **dadurch gekennzeichnet, dass** aktuelle Informationen berücksichtigt werden.

12. Verfahren gemäß Anspruch 11, **dadurch gekennzeichnet, dass** die aktuellen Verkehrsinformationen mindestens in die Berechnung der Navigationsdaten (5) einbezogen werden, die es ermöglichen müssen, Navigationsberechnungen im Fahrzeug (3) selbst durchzuführen, und dass sie insbesondere in die Bestimmung der oben erwähnten kontextuellen Informationen einbezogen werden.

13. Verfahren gemäß Anspruch 11 oder 12, **dadurch gekennzeichnet, dass** die aktuellen Verkehrsinformationen direkt an das Telematikgerät (2) in Fahrzeug (3) übertragen werden, wobei dieses Telematikgerät (2) die zu folgende Route in Abhängigkeit davon neu berechnet.

14. Verfahren gemäß einem der vorgenannten Ansprüche, **dadurch gekennzeichnet, dass** die oben erwähnten Navigationsdaten (5), insbesondere der oben erwähnte Algorithmus, komprimiert sind.

15. Verfahren gemäß einem der vorgenannten Ansprüche, **dadurch gekennzeichnet**, das die Vektordaten der oben erwähnten Navigationsdaten (5) komprimiert sind.

16. Verfahren gemäß einem der vorgenannten Ansprüche, **dadurch gekennzeichnet, dass** die oben erwähnten Navigationsdaten (5) als ein in JAVA ausgeführter Code übertragen werden.

17. Verfahren gemäß einem der vorgenannten Ansprüche, **dadurch gekennzeichnet, dass** die Navigationsdaten (5), die es ermöglichen, eine Berechnung an Bord von Fahrzeug (3) auszuführen, automatisch regelmäßig in Abhängigkeit von der Position von Fahrzeug (3) aktualisiert werden.

18. Gerät, um Navigationsdaten in einem Fahrzeug, insbesondere einem Straßenfahrzeug, unter Anwendung des Verfahrens gemäß der vorgenannten Ansprüche verfügbar zu machen, **dadurch gekennzeichnet, dass** es hauptsächlich aus einem Gerät (4) besteht, um unter anderem Navigationsdaten (5) per Funk verfügbar zu machen, wobei dieses Gerät (4) mit Mitteln (12) zum Übertragen kontextueller Informationen ausgestattet ist, die es ermöglichen, Navigationsberechnungen bzw. - neuberechnungen einer Route im Fahrzeug (3) selbst auszuführen; einem Telematikgerät (2), das im Fahrzeug (3) selbst vorhanden ist, das mindestens Mittel (8) für den Funkempfang der oben erwähnten Navigationsdaten (5), Mittel (9) zur Eingabe von Daten um nach einer Route zu fragen, Mittel (10) für die Verarbeitung von Navigationsdaten (5) mittels einer Recheneinheit (14) zur Berechnung oder Neuberechnung einer angefragten Route auf der Basis der oben erwähnten kontextuellen Informationen, und Mittel (11) zur Darstellung der Navigationsdaten, die wichtig für den Fahrer sind, aufweist; und Mitteln (7) zur Bestimmung der Position von Fahrzeug (3), die in Verbindung mit dem Telematikgerät (2) arbeiten oder ein Teil davon sind.

19. Gerät gemäß Anspruch 18, **dadurch gekennzeichnet, dass** das Gerät (4) zur Verfügbarmachung per Funk der Navigationsdaten (5) Mittel (15) enthält, die eine Route im Voraus berechnen können, damit die vorberechnete Route zusammen mit kontextuellen Informationen an das Fahrzeug (3) übertragen werden kann.

20. Gerät gemäß Anspruch 18 oder 19, **dadurch gekennzeichnet, dass** die Mittel (10) zur Verarbeitung der Navigationsdaten (5) ebenfalls eine Einheit (18) zur Verarbeitung von Verkehrsinformationen umfassen, wobei diese Einheit (18) mit der oben erwähnten Recheneinheit (14) zusammenarbeitet.

21. Gerät gemäß Anspruch 20, **dadurch gekennzeichnet, dass** es Mittel (21) zur Übertragung von Verkehrsinformationen aufweist, und dass die oben erwähnte Einheit (18) zur Verarbeitung der Verkehrsinformationen mindestens eine Filtereinheit umfasst, die ausschließlich die zweckdienlichen Informationen an die oben erwähnte Recheneinheit (14) überträgt.

22. Gerät gemäß einem der Ansprüche 18 bis 21, **dadurch gekennzeichnet, dass** die Mittel zur Bestimmung der Position von Fahrzeug (3) aus einem GPS bestehen.

## Revendications

1. Procédé pour rendre des données de navigation disponibles dans un véhicule, en particulier un véhicule routier, par lequel on fait usage d'un moyen (7) pour déterminer la position du véhicule (3) d'une part et par lequel des données de navigation (5) sont transmises via une connexion sans fil à un dispositif de télématique (2) dans le véhicule (3) d'autre part, **caractérisé en ce qu'**au moins un certain nombre de calculs ou de recalculs d'un trajet concernant la navigation sont réalisés dans le dispositif de télématique (2) du véhicule (3) lui-même, en se basant sur les données de navigation (5) reçues via le connexion sans fil.

2. Procédé selon la revendication 1, **caractérisé en ce que**, lors de la détermination d'une route, on franchit au moins les étapes indiquées ci-après consistant à :
- envoyer une demande de trajet jusqu'à un endroit désiré via une connexion sans fil entre le dispositif de télématique (2) du véhicule (3) et un dispositif (4) d'un fournisseur de données (21) ;
- déterminer un trajet calculé au préalable par le fournisseur de données ;
- transmettre les données du trajet calculé au préalable au dispositif de télématique (2) dans le véhicule (3) via le fournisseur de données et stocker lesdites données dans une mémoire du dispositif de télématique (2) ;
- transmettre des informations textuelles concernant la zone limitrophe du trajet calculé au préalable, également via le fournisseur de données et stocker lesdites données dans une mémoire du dispositif de télématique (2) ;
- envoyer des signaux au dispositif de télématique (2) qui permettent au conducteur du véhicule (3) de suivre le trajet calculé au préalable ;
- et, si on le souhaite ou en cas de nécessité, élaborer des calculs supplémentaires concernant la navigation sur base des informations contextuelles stockées dans le dispositif de télématique (2) lui-même.

3. Procédé selon la revendication 2, **caractérisé en ce qu'**on utilise des informations contextuelles pour recalculer le trajet au moment où le véhicule (3) quitte le trajet calculé au préalable.

4. Procédé selon la revendication 2 ou 3, **caractérisé en ce qu'**une certaine quantité d'informations contextuelles est transmise, et lorsque lesdites informations contextuelles sont insuffisantes pour le calcul concerné dans le dispositif de télématique (2) du véhicule (3), des informations contextuelles supplémentaires ou nouvelles seront automatiquement disponibles via la connexion sans fil.

5. Procédé selon la revendication 1, **caractérisé en ce que** des données (5) concernant la navigation, en particulier des informations contextuelles, sont générées qui permettent de calculer des trajets en fonction de la position du véhicule (3) et/ou en fonction de la destination finale du trajet requis et/ou en fonction de la balise de transmission utilisée, **en ce que** ces données de navigation (5) sont transmises au véhicule (3) et **en ce que** le trajet à suivre est calculé dans le dispositif de télématique (2) du véhicule (3).

6. Procédé selon la revendication 5, **caractérisé en ce que** la transmission a lieu à des moments réguliers, en combinaison ou non avec des transmissions suite à une demande émanant du dispositif de télématique (2) du véhicule (3).

7. Procédé selon la revendication 5 ou 6, **caractérisé en ce qu'**on utilise plusieurs balises de transmission, dont chacune possède une plage restreinte, mais dont l'ensemble recouvre la totalité d'une zone, et **en ce que** des données de navigation (5) sont transmises en ce qui concerne la zone directement limitrophe de la balise de transmission concernée, tandis que moins de détails sont transmis concernant la zone plus large.

8. Procédé selon l'une quelconque des revendications 2 à 7, **caractérisé en ce que** des informations contextuelles sélectionnées sont transmises, lesdites informations contenant plus de détails pour les zones dans lesquelles le risque de devoir recalculer le trajet est supérieur à celui des autres zones.

9. Procédé selon la revendication 8, **caractérisé en ce que** les informations contextuelles contiennent au moins de plus amples détails concernant le point de départ et le point d'arrivée du trajet calculé au préalable, ainsi que de plus amples détails concernant les endroits de grand trafic, tandis qu'elles contiennent moins de détails en ce qui concerne les parties intermédiaires du trajet.

10. Procédé selon l'une quelconque des revendications précédentes, **caractérisé en ce que** les données de navigation (5) que l'on obtient via la connexion sans fil et qui permettent d'élaborer les calculs de navigation susmentionnée dans le dispositif de télématique (2) dans le véhicule (3), en particulier les informations contextuelles susmentionnées, sont transmises de manière conjointe avec un algorithme.

11. Procédé selon l'une quelconque des revendications précédentes, **caractérisé en ce que** des informations en vigueur sont prises en compte.

12. Procédé selon la revendication 11, **caractérisé en ce que** les informations concernant le trafic en vigueur sont au moins impliquées dans le calcul de données de navigation (5) qui doivent permettre d'élaborer des calculs de navigation dans le véhicule (3) lui-même, et sont en particulier impliquées dans la détermination des informations contextuelles susmentionnées.

13. Procédé selon la revendication 11 ou 12, **caractérisé en ce que** les informations du trafic en vigueur sont transmises directement au dispositif de télématique (2) dans le véhicule (3), le dispositif de télématique (2) recalculant le trajet à suivre en fonction desdites informations.

14. Procédé selon l'une quelconque des revendications précédentes, **caractérisé en ce que** les données de navigation susmentionnées (5), en particulier l'algorithme susmentionné, sont comprimées.

15. Procédé selon l'une quelconque des revendications précédentes, **caractérisé en ce que** les données vectorielles des données de navigation (5) susmentionnées sont comprimées.

16. Procédé selon l'une quelconque des revendications précédentes, **caractérisé en ce que** les données de navigation susmentionnées (5) sont transmises sous la forme d'un code exécuté dans JAVA.

17. Procédé selon l'une quelconque des revendications précédentes, **caractérisé en ce que** les données de navigation (5) qui permettent d'élaborer un calcul à bord d'un véhicule (3) sont régulièrement mises à jour de manière automatique en fonction de la position du véhicule (3).

18. Dispositif pour procurer des données de navigation à un véhicule, en particulier un véhicule routier, mettant en oeuvre le procédé selon l'une quelconque des revendications précédentes, **caractérisé en ce qu'**il est constitué principalement par un dispositif (4) pour entre autres procurer des données de navigation (5) en l'absence de fil, ce dispositif (4) étant équipé d'un moyen (12) qui permet de générer et de transmettre des informations contextuelles qui rendent possible l'élaboration dans le véhicule (3) lui-même de calculs ou de recalculs d'un trajet concernant la navigation ; par un dispositif de télématique (2) qui est présent dans le véhicule (3), possédant au moins un moyen (8) pour la réception sans fil des données de navigation (5) susmentionnées ; par un moyen (9) pour entrer des données permettant de demander un trajet ; par un moyen (10) pour le traitement des données de navigation (5), possédant une unité arithmétique (14) pour le calcul ou le recalcul d'un trajet demandé, sur base des informations contextuelles susmentionnées ; et par un moyen (11) pour représenter les données de navigations qui sont importantes pour le conducteur ; et par un moyen (7) pour déterminer la position du véhicule (3), qui travaille de manière conjointe avec le dispositif de télématique (2) ou qui fait partie de ce dernier.

19. Dispositif selon la revendication 18, **caractérisé en ce que** le dispositif (4) pour rendre les données de navigation (5) disponibles en l'absence de fil, contient un moyen (15) qui permet de calculer un trajet à l'avance de façon à transmettre le trajet calculé à l'avance de manière conjointe avec les informations contextuelles au véhicule (3).

20. Dispositif selon la revendication 18 ou 19, **caractérisé en ce que** le moyen (10) pour traiter les données de navigation (5) possède également une unité (18) pour traiter des informations concernant le trafic, cette unité (18) travaillant de manière conjointe avec l'unité arithmétique (14) mentionnée ci-dessus.

21. Dispositif selon la revendication 20, **caractérisé en ce qu'**il contient un moyen (21) pour transmettre des informations concernant le trafic, et **en ce que** l'unité (18) susmentionnée pour traiter les informations concernant le trafic contient au moins une unité de filtre qui transmet de manière exclusive les informations pertinentes à l'unité arithmétique (14) susmentionnée.

22. Dispositif selon l'une quelconque des revendications 18 à 21, **caractérisé en ce que** le moyen pour déterminer la position du véhicule (3) est constitué d'un GPS.
